Europäisches Patentamt

European Patent Office

Office européen des brevets

(19)

(11) Veröffentlichungsnummer: **0 175 059**
**B1**

(12) # EUROPÄISCHE PATENTSCHRIFT

(45) Veröffentlichungstag der Patentschrift :
13.12.89

(51) Int. Cl.⁴ : **C 09 D   5/18**

(21) Anmeldenummer : 85106813.0

(22) Anmeldetag : 03.06.85

(54) **Flammwidrige Dispersionsfarbe.**

(30) Priorität : 14.09.84 DE 3433720

(43) Veröffentlichungstag der Anmeldung :
26.03.86 Patentblatt 86/13

(45) Bekanntmachung des Hinweises auf die Patenterteilung : 13.12.89 Patentblatt 89/50

(84) Benannte Vertragsstaaten :
CH FR GB IT LI SE

(56) Entgegenhaltungen :
EP--A-- 0 112 314
US--A-- 3 827 997
FARBE & LACK, Band 91, Mai 1985, Seiten 395-397,
Hannover, DE; B. STURM et al.: "Aluminiumhydroxid
als flammhemmender Füllstoff in Dispersionsfarben"
PLAST-VERARBEITER, Band 33, Nr. 7, Juli 1982,
Seiten 771-774, Speyer/Rhein, DE; D.J. BRAUN:
"Wirkung und Anwendungsbereich von Aluminiumhydroxid als flammhemmender Füllstoff"

(73) Patentinhäber : VEREINIGTE ALUMINIUM-WERKE
AKTIENGESELLSCHAFT
Berlin - Bonn Postfach 2468 Georg-von-Boeselager-
Strasse 25
D-5300 Bonn 1 (DE)

(72) Erfinder : Löscher, Erika
Gotenstrasse 12
D-5480 Remagen (DE)
Erfinder : Sturm, Berthold, Dr. Dipl.-Chem.
Michael-Müller-Ring 35
D-6500 Mainz (DE)
Erfinder : Braun, Dieter J. Dr. Dipl.-Chem.
Reichensteinstrasse 47c
D-5210 Troisdorf 19 (DE)

**Beschreibung**

Die Erfindung betrifft eine flammwidrige Dispersionsfarbe auf der Bindemittelbasis einer Dispersion von organischen Polymeren des Polyvinylacetates, des Polyacrylates, des Polystyrolacrylates, des Ethylenacrylates, des Styrolacrylates oder deren Copolymerisate mit Additiven wie Entschäumer, Dispergiermittel, Konservierungsmittel, Verlaufmittel und Entsäuerungsmittel.

Dispersionen von organischen Polymeren, insbesondere von Polyvinylacetat, Polyacrylat, Polystyrolacrylat, Ethylenacrylat und von deren Copolymeren bilden die Basis für Anstrichfarben, die besonders im Bauwesen verwendet werden. Solche Anstrichfarben werden aus bautechnischen Gründen flammwidrig ausgerüstet. Übliche flammhemmende Zusätze sind :

A) Verbindungen des Chlors, Broms, Phosphors, Stickstoffs u.a.m.,
B) Antimontrioxid, welches immer in Verbindung mit Halogenen in größeren Mengen als Pigment zugesetzt wird,
C) Mischungen von A) mit Aluminiumhydroxid (2-15 %),
D) Aluminiumhydroxid als Flammschutzmittel (2-25 %-ig).

Die unter A bis C genannten Zusätze erfüllen zwar u.U. die Flammschutzprüfung nach DIN 4102 B1, haben jedoch gravierende Nachteile. Dies sind unter anderem :

1. Bildung von Säurenebeln, die
a) zur Behinderung der Löschmannschaft und
b) zu Folgeschäden führen.
2. Bildung toxischer Produkte, die z.T. unter dem Verdacht stehen, Krebs zu erregen.
3. Belastung der Atmosphäre und Bildung persistenter Rückstände bei der Verbrennung halogenierter Flammschutzmittel.
4. Geringe Elektroytverträglichkeit der Bindemittel gestattet nicht den wirkungsvollsten Einsatz der unter A) genannten Flammschutzmittel.
5. Antimontrioxid zeigt toxische Wirkung und eine mangelnde Gilbungsbeständigkeit.
6. Die unter D) genannte Zusammensetzung erfüllt nicht die Flammschutzprüfung nach DIN 4102 B1.

Aus « Plast-Verarbeiter » 33 (1982), S. 771-774, ist bekannt, daß Aluminiumhydroxid als flammhemmender Füllstoff in verschiedenen Kunststoffen verwendet werden kann, wobei sowohl gemahlenes als auch chemisch nachbehandeltes Aluminiumhydroxid eingesetzt wird. Die Korngrößen des verwendeten Aluminiumhydroxids liegen bei gemahlenen Qualitäten zwischen $d_{50} = 1$ bis 2 $\mu$m und chemisch behandelten abgerundeten Hydroxidkörnern mit einem mittleren Durchmesser zwischen 10 und 25 $\mu$m.

Aufgabe der vorliegenden Erfindung ist es nun, flammwidrige Dispersionsfarben der eingangs genannten Art derart umweltfreundlich auszustatten, daß die Rauchentwicklung und deren Folgeschäden im Brandfall weitgehend gemildert werden, wobei die Verarbeitung und der Aufbau der Farbe deutlich vereinfacht wird.

Die gestellte Aufgabe wird dadurch erfüllt, daß zu den Dispersionen der o.g. Polymere neben den Additiven als einziger Wirkstoff Aluminiumhydroxid zugegeben wird.

Da mit zunehmendem Anteil an Aluminiumhydroxid die Verarbeitung durch steigende Viskosität und Sedimentation erschwert wird sowie die Rißbildungsgefahr des Anstrichs steigt, war es bisher nicht möglich, mehr als 25 % Al(OH)$_3$ in organische Dispersionen einzuarbeiten.

Aluminiumhydroxid wirkt als Flammschutzmittel, da es bei Temperaturen über 180 °C Wasser freisetzt. Die Löschwirkung beruht auf einer thermischen Dehydratisierung von bis zu 35 Gewichts-% Wasser (-dampf). Dadurch wird der Temperaturanstieg gebremst, weitere Entzündungen verhindert und der Luftsauerstoff am Brandherd verdünnt und verdrängt.

Aluminiumhydroxid und die beim Verbrennungsprozeß resultierenden Oxide sind nicht toxisch und physiologisch unbedenklich.

Durch den Einsatz von > 30 % Aluminiumhydroxid in Kunstharz-Dispersionsfarben wird außerdem eine extrem hohe Flammwidrigkeit erreicht, wie sie in DIN 4102 B1 im Bauwesen gefordert ist.

Die Farbanstriche mit hohen Füllgraden an Aluminiumhydroxid
— fördern die Verbrennung nicht,
— wirken der Ausweitung des Brandes entgegen,
— sind selbst kaum und bei 60 % Al(OH)$_3$-Anteil nicht entzündbar,
— schützen auch wirksam unter ihnen liegende brennbare Schichten.

Die bei üblichen Flammschutzmitteln freigesetzten toxischen halogenhaltigen oder antimontrioxidhaltigen Abgase werden nicht gebildet. Aufgrund seiner hohen Weiße wirkt Aluminiumhydroxid zusätzlich als Pigment und bei geeigneter Korngrößenverteilung als Füllstoff mit auffällig geringer Beeinflussung der Dispersionsviskosität bei gleichzeitiger Dispersionsstabilität.

Zur Erfüllung besonders guter Verarbeitungseigenschaften und gleichzeitig guter Flammwidrigkeit sind Aluminiumhydroxid-Qualitäten erforderlich, welche die Kristallstruktur des Hydrargillits aufweisen und einen mittleren Korndurchmesser $d_{50}$ zwischen 1-3 $\mu$m und 8-11 $\mu$m haben. Dies gewährleistet

— eine gute Dispergierbarkeit,

— eine stabile Viskosität und verhindert

— eine Trennung der Dispersionen durch Sedimentation.

Es wurde gefunden, daß, um den Anforderungen an die Flammwidrigkeit der Anstriche gemäß dem Brandschachttest nach DIN 4102 B1 zu genügen, die Menge des Aluminiumhydroxids 30 bis 60 % des Gesamtgewichtes, je nach der chemischen Zusammensetzung der polymeren Komponente der Dispersion, betragen muß.

Es wurde weiterhin gefunden, daß die gewünschten, vorher beschriebenen Eigenschaften der Dispersionsfarben in besonders geeigneter Weise durch die Kombination von zwei Hydrargillit-Körnungen im Gewichtsverhältnis 1 : 1 bis 1 : 4 erzielt werden, wobei das eine Hydroxid die mittlere Korngröße von $d_{50} = 1$ bis 3 und das andere von 8 bis 11 μm aufweist. Die Korngrößenbestimmungen erfolgen mit einem Coulter-Countergerät.

Zum Vergleich der Eignung verschiedener $Al(OH)_3$-Körnungen wurden Dispersionen von Polyvinylacetat (Mowilith DC Fa. Hoechst) mit einem Füllgrad von 35 % Aluminiumhydroxid hergestellt. Das Aluminiumhydroxid konnte dabei sowohl als Trockenstoff als auch als filterfeuchtes Material oder Slurry zugegeben werden. Die Eigenschaften der erzeugten Dispersionen unter Einsatz von filterfeuchtem Material (u. a. nach DIN 53 778 Teil 1) sind in Tabelle 1 wiedergegeben. Tabelle 2 zeigt die analogen Ergebnisse für eine Dispersion mit 60 Gewichts-% $Al(OH)_3$, bezogen auf das Gesamtgewicht eines Copolymerisats aus Acrylsäureestern (Mowilith DM, Fa. Hoechst).

Die Flammwidrigkeit wurde in beiden Fällen durch den Brandschachttest DIN 4 102 B1 — Schwerentflammbar — nachgewiesen. Bei diesem Test werden in einem schachtförmigen Ofen 4 Proben (190 x 1 000 mm) rechteckförmig über einem Brennkranz aufgehängt und für 10 Minuten beflammt. Bewertungskriterien sind die im Schacht gemessene Temperatur der Rauchgase sowie die unverbrannte Restlänge der Probekörper. DIN 4 102 B1 gilt als erfüllt, wenn der Mittelwert der Restlänge mindestens 150 mm beträgt und die mittlere Rauchgastemperatur 200 °C nicht übersteigt. Eine Einstufung des Brandverhaltens gemäß DIN 4 102 A2 kann vorgenommen werden, wenn 350 mm respektive 125 °C erreicht werden.

Aufgrund der gefundenen Werte des für 3 Stunden bei 105 °C getrockneten Anstrichfilms gilt auch die Teilprüfung DIN 4 102 A2 (nicht brennbar) als erfüllt.

Neben den Brandschachttests wurden auch Untersuchungen mit dem LOI (Limiting Oxygen Index)-Gerät nach ASTM 2 863 durchgeführt. Bei dieser Messung wird der Sauerstoffgehalt in Prozent einer $O_2/N_2$-Mischung bestimmt, in der der Probekörper gerade noch 3 Minuten brennt. Für diesen Test wurde die Kunstharz-Dispersionsfarbe auf PE-Folie aufgestrichen und nach dem Trocknen abgezogen. Die Probe wurde auf 150 x 150 mm zurechtgeschnitten. Die Schichtdicke betrug in unserem Falle bis zu 0,5 mm. Die Tests erbrachten folgendes Ergebnis:

1. Kunstharz-Dispersionsfarben mit 35 bis 40 % Aluminiumhydroxid und 12 bis 13 % Bindemittel-Festgehalt ergeben als getrockneter Film bei der LOI-Messung im reinen Sauerstoffstrom eine Brenndauer unter einer Minute.

2. Kunstharz-Dispersionsfarben mit 60 % Aluminiumhydroxid und 10 % Bindemittel-Festgehalt sind als getrockneter Film im reinen Sauerstoffstrom nicht entzündbar.

(Siehe Tabelle Seite 4 ff.)

## Tabelle 1

### Dispersionsfarben : Polyvinylazetat mit 35 % Al(OH)$_3$

| $D_{50}$ µm | 1 Verarbeitbarkeit | 2 Aussehen v.Anstrich | 3 Flammwidrigkeit | 4 LOI-Index |
|---|---|---|---|---|
| 2 | zu hochviskos | Neigung zur Haarrißbildung | nach DIN 4102 B1 erfüllt | 100% Brenndauer < 1 min. |
| 10, | sedimentiert | ohne Beanstandung | erfüllt | 100% Brenndauer < 1 min. |
| 2 + 10 4:1 | gut verarbeit-bar und stabil | ohne Beanstandung | erfüllt | 100% Brenndauer < 1 min. |

EP 0 175 059 B1

## Tabelle 2

Dispersionsfarben : Copolymerisat von Acrylsäureestern mit 60 % Al(OH)$_3$

| $D_{50}$ µm | 1 Verarbeitbarkeit | 2 Aussehen v. Anstrich | 3 Flammwidrigkeit | 4 LOI - Index |
|---|---|---|---|---|
| 2 | zu hochviskos | Neigung zur Haarrißbildung | nach DIN 4102 B1 erfüllt | 100% Flamme zündet nicht |
| 10 | sedimentiert | ohne Beanstandung | erfüllt | 100% Flamme zündet nicht |
| 2 + 10  .1:1 | gut verarbeitbar und stabil | ohne Beanstandung | erfüllt | 100% Flamme zündet nicht |

EP 0 175 059 B1

**Patentansprüche**

1. Flammwidrige Dispersionsfarbe auf der Bindemittelbasis einer Dispersion von organischen Polymeren des Polyvinylacetates, des Polyacrylates, des Polystyrolacrylates, des Ethylenacrylates, des Styrolacrylates oder deren Copolymerisate mit Additiven wie Entschäumer, Dispergiermittel, Konservierungsmittel, Verlaufmittel und Entsäuerungsmittel, dadurch gekennzeichnet, daß zur Erfüllung der Flammschutzprüfung nach DIN 4 102 B1 die Dispersionsfarbe aus folgenden Zusammensetzungen besteht : 30-60 Gew.-% plättchenförmig ausgebildeter Hydrargillit Al(OH)₃, der aus einer Mischung einer Komponente mit mittlerem Korndurchmesser zwischen 1-3 µm und einer Komponente mit mittlerem Korndurchmesser zwischen 8-11 µm besteht, wobei die erste Komponente 0,5 % der Teilchen > 10 µm und die zweite Komponente 0 % der Teilchen > 30 µm aufweist, 8-15 % Bindemittel und 0,3-3 % Additive, Rest Wasser.

2. Flammwidrige Dispersionsfarbe nach Anspruch 1, dadurch gekennzeichnet, daß das verwendete Aluminiumhydroxid aus 4 Gew.-Teilen der Feinfraktion und einem Gew.-Teil der groben Fraktion besteht und die Dispersion mit Polyvinylacetat gebildet wird.

3. Flammwidrige Dispersionsfarbe nach Anspruch 1, dadurch gekennzeichnet, daß das Aluminiumhydroxid aus gleichen Gew.-Teilen der Fein- und groben Fraktion zusammengesetzt ist und die Dispersion aus Polymeren von Acrylat und/oder Styrolbutadien und Styrolacrylat besteht.

4. Flammwidrige Dispersionsfarbe nach Anspruch 1, dadurch gekennzeichnet, daß 60 % plättchenförmiges Al(OH)₃ und 10 % Bindemittel verwendet werden.


**Claims**

1. Fire-retardant dispersion paint which contains a binder based on a dispersion of organic polymers of polyvinyl acetate, polyacrylate, polystyrene acrylate, ethylene acrylate, styrene acrylate or copolymers thereof, containing additives such as antifoams, dispersants, preservatives, flow control agents and deacidification agents, characterized in that the dispersion paint, in order to pass the fire resistance test according to DIN 4 102 B1, comprises the following compositions : 30-60 % by weight of hydrargillite Al(OH)₃, in the form of platelets which consists of a mixture of a component with an average particle diameter between 1-3 µm and a component with an average particle diameter between 8-11 µm, the first component having 0.5 % of the particles >10 µm and the second component having 0 % of the particles > 30 µm, 8-15 % of binder and 0.3-3 % of additives, the remainder being water.

2. Fire-retardant dispersion paint according to Claim 1, characterized in that the aluminium hydroxide used consists of 4 parts by weight of the smaller-particle fraction and 1 part by weight of the larger-particle fraction, and the dispersion is formed with polyvinyl acetate.

3. Fire-retardant dispersion paint according to Claim 1, characterized in that the aluminium hydroxide consists of equal parts by weight of the smaller-particle fraction and larger-particle fraction, and the dispersion comprises polymers of acrylate and/or styrene butadiene and styrene acrylate.

4. Fire-retardant dispersion paint according to Claim 1, characterized in that 60 % of Al(OH)₃, in the form of platelets and 10 % of binder are used.


**Revendications**

1. Peinture en dispersion ignifugeante dont le liant a pour base une dispersion de polymères organiques d'acétate de polyvinyle, de polyacrylate, de polystyrène acrylate, d'éthylène acrylate, de styrène acrylate ou de leurs copolymérisats contenant des additifs tels qu'agent antimousse, agent de dispersion, agent conservateur, agent d'écoulement et agent désacidifiant, caractérisée en ce que, pour satisfaire au contrôle de résistance à la combustion selon la DIN 4102 B1, la peinture en dispersion présente les compositions suivantes : 30 à 60 % en poids d'hydrargillite Al(OH)₃ se présentant sous forme lamellaire, composé d'un mélange d'un composant présentant un diamètre de grain moyen compris entre 1 et 3 µm et d'un composant présentant un diamètre de grain moyen compris entre 8 et 11 µm, le premier composant ayant 0,5 % de particules > 10 µm et le deuxième composant ayant 0 % de particules > 30 µm, 8 à 15 % de liant et 0,3 à 3 % d'additifs, le reste étant de l'eau.

2. Peinture en dispersion ignifugeante selon la revendication 1, caractérisée en ce que l'hydroxyde d'aluminium utilisé est constitué de 4 parties en poids de la fraction fine et d'une partie en poids de la fraction grossière.

3. Peinture en dispersion ignifugeante selon la revendication 1, caractérisée en ce que l'hydroxyde d'aluminium est constitué du même nombre de parties en poids de la fraction fine et de la fraction grossière et en ce que la dispersion est constituée de polymères d'acrylate et/ou de styrène-butadiène et de styrène acrylate.

4. Peinture en dispersion ignifugeante selon la revendication 1, caractérisée en ce que l'on utilise 60 % d'Al(OH)₃ sous forme lamellaire et 10 % de liant.